# EUROPEAN PATENT APPLICATION

(11) **EP 4 730 637 A1**
(43) Date of publication of application: **22.04.2026**
(21) Application number: 24822640.9
(22) Date of filing: 07.06.2024
(51) Int. Cl.: H02M 7/487, H02M 7/5387, H02M 7/5395, H02M 1/088

(54) **CONTROL METHOD FOR INVERTER CIRCUIT, A POWER CONVERSION DEVICE, AND ENERGY STORAGE APPARATUS**

(30) Priority: 14.06.2023 CN 202310709192
(71) Applicant: EcoFlow Inc., Shenzhen, Guangdong 518000 (CN)
(72) Inventor: WU, Dong, Shenzhen, Guangdong 518000 (CN); CHEN, Xi, Shenzhen, Guangdong 518000 (CN); WANG, Lei, Shenzhen, Guangdong 518000 (CN); LU, Longbo, Shenzhen, Guangdong 518000 (CN)
(74) Representative: Appelt, Christian W.
(86) International application number: PCT/CN2024/097902
(87) International publication number: WO 2024/255689

(57) **Abstract**

A control method for an inverter circuit is provided. When an output current of a T-type three-level inverter circuit is greater than a preset threshold and the circuit is not in an overcurrent protection state, the overcurrent protection state is triggered. When the circuit is in the overcurrent protection state, outputting of a first drive signal is stopped, and a third drive signal is outputted, so that a first switch transistor and a second switch transistor in a first bridge arm are in an off state due to not receiving the first drive signal, and a second bridge arm is alternately turned on due to receiving the third drive signal.

## Description

### CROSS-REFERENCE TO RELATED APPLICATIONS

The present application claims priority to Chinese Patent Application No. 202310709192.2, filed with the China National Intellectual Property Administration on June 14, 2023 and entitled "CONTROL METHOD FOR INVERTER CIRCUIT, POWER CONVERSION APPARATUS, AND ENERGY STORAGE DEVICE", which is incorporated herein by reference in its entirety.

### TECHNICAL FIELD

The present application relates to the field of voltage conversion technologies, and in particular, to a control method for an inverter circuit, a power conversion apparatus, and an energy storage device.

### BACKGROUND

The descriptions herein merely provide background information related to the present application, and do not necessarily constitute exemplary technologies.

In an off-grid inverter having a T-type three-level inverter circuit topology, when an output terminal is connected to a nonlinear load (for example, an RCD load), overcurrent protection is typically implemented using a cycle-by-cycle current limiting protection mechanism. In other words, when it is detected that an output current of the off-grid inverter is higher than an overcurrent protection threshold, wave blocking is performed on all switch transistors in the off-grid inverter to reduce the output current. After the output current is less than an overcurrent threshold, the sending of a wave to the switch transistors in the off-grid inverter is resumed. If the output current of the off-grid inverter is subjected to overcurrent, the output current of the off-grid inverter is higher than the overcurrent threshold again, and wave blocking is performed on all switch transistors again. The sending of a wave to the switch transistor is resumed when the output current is less than the overcurrent threshold again. Shutdown is performed on the off-grid inverter after a plurality of times of wave blocking. However, when wave blocking is performed on all switch transistors, a voltage across a bus capacitor is easily increased, which causes an imbalance in voltage of a midpoint of the direct current (DC) bus, thereby easily causing problems such as damage to a switch transistor and premature shutdown protection.

### SUMMARY

According to various embodiments of the present application, the present application provides a control method for an inverter circuit, a power conversion apparatus, and an energy storage device.

The present application provides a control method for a T-type three-level inverter circuit. the T-type three-level inverter circuit includes a bus capacitor unit, a positive direct current (DC) bus, a negative DC bus, a first bridge arm, a second bridge arm, and an inductor. The bus capacitor unit is connected between the positive DC bus and the negative DC bus. The bus capacitor unit includes two bus capacitors connected in series. The first bridge arm is connected between the positive DC bus and the negative DC bus. The first bridge arm includes a first switch transistor and a second switch transistor connected in series. A midpoint between the first switch transistor and the second switch transistor is connected to a first end of the inductor. A second end of the inductor serves as an output terminal of the T-type three-level inverter circuit. The second bridge arm is connected between a midpoint of the first bridge arm and a midpoint of the two bus capacitors. The control method includes: obtaining an output current and an overcurrent protection state of the T-type three-level inverter circuit; triggering the overcurrent protection state when the output current is greater than a preset overcurrent protection threshold; outputting a first drive signal and a second drive signal when the circuit is not in the overcurrent protection state, where the first drive signal is used to drive the first bridge arm to operate, and the second drive signal is used to drive the second bridge arm to operate, so as to convert a DC on the positive DC bus and the negative DC bus into an alternating current (AC) for output; and stopping outputting the first drive signal and outputting a third drive signal when the circuit is in the overcurrent protection state, where when the first drive signal is not received, the first switch transistor and the second switch transistor in the first bridge arm are both in an off state, and the third drive signal is used to drive the second bridge arm to be alternately turned on.

The present application further provides a power conversion apparatus. The power conversion apparatus includes a T-type three-level inverter circuit and a controller. The T-type three-level inverter circuit includes a bus capacitor unit, a positive DC bus, a negative DC bus, a first bridge arm, a second bridge arm, and an inductor. The bus capacitor unit is connected between the positive DC bus and the negative DC bus. The bus capacitor unit includes two bus capacitors connected in series. The first bridge arm is connected between the positive DC bus and the negative DC bus. The first bridge arm includes a first switch transistor and a second switch transistor connected in series. A midpoint between the first switch transistor and the second switch transistor is connected to a first end of the inductor. A second end of the inductor serves as an output terminal of the T-type three-level inverter circuit. The second bridge arm is connected between a midpoint of the first bridge arm and a midpoint of the two bus capacitors. The controller is configured to perform the foregoing control method.

The present application further provides an energy storage device. The energy storage device includes an energy storage battery and the foregoing power conversion apparatus. The energy storage battery is connected to the positive DC bus and the negative DC bus to provide a DC to the positive DC bus and the negative DC bus. The T-type three-level inverter circuit is configured to convert the DC on the positive DC bus and the negative DC bus into an AC for output.

The present application further provides an electronic device, including a processor and a memory. The memory stores an executable instruction of the processor. The processor is configured to perform the foregoing control method by executing the executable instruction.

The present application further provides a computer-readable storage medium, storing a computer program. The computer program, when executed by a processor, implements the foregoing control method.

Details of one or more embodiments of the present application are provided in the following drawings and descriptions. Other features, objectives, and advantages of the present application become apparent from the specification, the drawings, and the claims.

### BRIEF DESCRIPTION OF THE DRAWINGS

To describe the technical solutions of the embodiments of the present application or the exemplary technology more clearly, the following briefly describes the drawings required for describing the embodiments or the exemplary technology. Apparently, the drawings in the following description merely show some of the embodiments of the present application, and a person of ordinary skill in the art may derive the drawings of other embodiments from these drawings without creative efforts.
FIG. 1 is a schematic diagram of modules of a power conversion apparatus according to an embodiment of the present application.
FIG. 2 is a schematic structural diagram of a circuit of a T-type three-level inverter circuit according to an embodiment of the present application.
FIG. 3 is a schematic diagram of a flow path of a current when wave blocking is performed on all switch transistors of a T-type three-level inverter circuit according to an embodiment of the present application.
FIG. 4 is a flowchart of a control method for a T-type three-level inverter circuit according to an embodiment of the present application.
FIG. 5 is a schematic diagram of a flow path of a current of a T-type three-level inverter circuit in an overcurrent protection state according to an embodiment of the present application.
FIG. 6 is a partial flowchart of a control method for a T-type three-level inverter circuit according to an embodiment of the present application.
FIG. 7 is a detailed flowchart of step S130 in FIG. 4.
FIG. 8 is a partial flowchart of a control method for a T-type three-level inverter circuit according to an embodiment of the present application.
FIG. 9 is a schematic diagram of modules of an energy storage device according to an embodiment of the present application.
FIG. 10 is a schematic diagram of modules of an electronic device according to an embodiment of the present application.

### DETAILED DESCRIPTION

The terms such as "first" and "second" in the specification and claims of the present application and in the drawings are used for distinguishing similar objects and not used for describing any particular order or sequence.

In addition, it should be noted that, the method disclosed in the embodiments of the present application or the method shown in the flowcharts includes one or more steps for implementing the method. An execution order of a plurality of steps may be exchanged with each other and some steps may also be deleted without departing from the scope of the claims.

Some embodiments are described below with reference to the drawings. The following embodiments and features in the embodiments may be combined with each other in the case of no conflict.

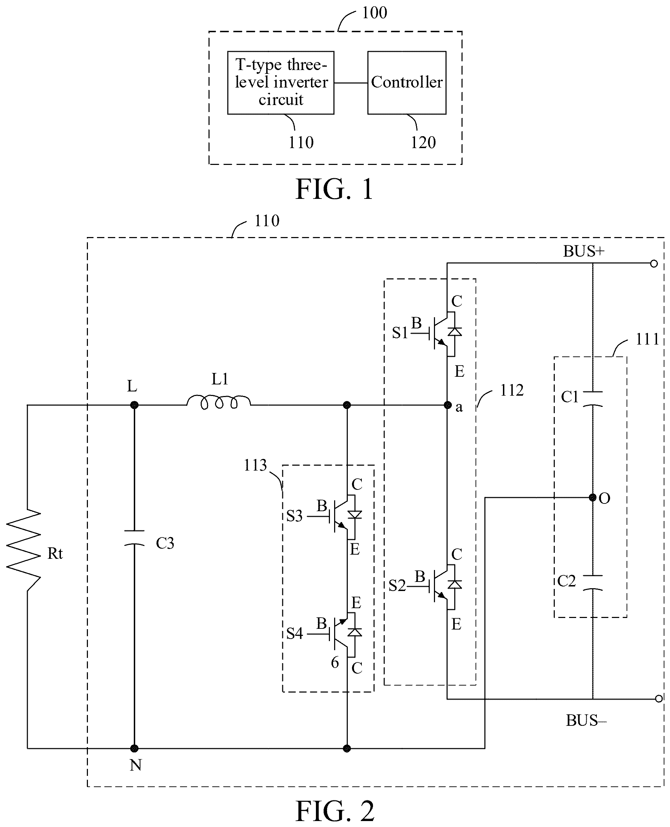

Referring to FIG. 1, FIG. 1 shows a power conversion apparatus 100 according to an embodiment of the present application. As shown in FIG. 1, the power conversion apparatus 100 includes a T-type three-level inverter circuit 110 and a controller 120. The controller 120 is configured to control the T-type three-level inverter circuit 110 to operate, so that the T-type three-level inverter circuit 110 outputs an alternating current (AC). In this embodiment, the T-type three-level inverter circuit 110 is a single-phase T-type three-level inverter circuit.

Referring to FIG. 2, FIG. 2 shows the T-type three-level inverter circuit 110 according to an embodiment of the present application. As shown in FIG. 2, the T-type three-level inverter circuit 110 is a single-phase T-type three-level inverter circuit. The T-type three-level inverter circuit 110 includes a bus capacitor unit 111, a positive DC bus and a negative DC bus (BUS+ and BUS-), a first bridge arm 112, a second bridge arm 113, and an inductor L1.

The positive DC bus and the negative DC bus (BUS+ and BUS-) may be configured to be connected to a power supply, to receive a direct current (DC) provided by the power supply. In an embodiment, the power conversion apparatus 100 may further include a DC conversion circuit. One end of the DC conversion circuit is configured to be connected to a DC power supply, and the other end of the DC conversion circuit is configured to be connected to the positive DC bus and the negative DC bus (BUS+ and BUS-). The DC conversion circuit is configured to perform voltage conversion on a DC supplied by the DC power supply and then output the DC to the positive DC bus and the negative DC bus (BUS+ and BUS-), so as to supply power to the T-type three-level inverter circuit 110.

The bus capacitor unit 111 is connected between the positive DC bus and the negative DC bus (BUS+ and BUS-). The bus capacitor unit 111 includes two bus capacitors connected in series. FIG. 2 is described by using two bus capacitors, which are respectively a bus capacitor C1 and a bus capacitor C2. One end of the bus capacitor C1 is connected to the positive DC bus BUS+, and the other end of the bus capacitor C1 is connected to one end of the bus capacitor C2. The other end of the bus capacitor C2 is connected to the negative DC bus BUS-. A midpoint O of the two bus capacitors is a connection point between the two bus capacitors. The point is a reference point of the T-type three-level inverter circuit 110. A potential at the reference point is the reference zero potential. A voltage between the positive DC bus and the negative DC bus (BUS+ and BUS-) is referred to as Udc. Energy is stored through the bus capacitor C1 and bus capacitor C2. When the bus capacitors are in a voltage balance state, a voltage across the bus capacitor C1 is +Udc/2, a voltage across the bus capacitor C2 is Udc/2, or a voltage difference between the bus capacitors is within a preset allowable deviation range. When the voltage difference between the two bus capacitors exceeds the preset allowable deviation range, the two bus capacitors need to be balanced. An additional balancing circuit needs to be added in a conventional circuit to balance the voltage on the bus capacitor, which increases product costs. In this embodiment, a phenomenon of imbalance of a voltage on a bus capacitor can be avoided by changing driving of the single-phase T-type three-level inverter circuit, so that a bus midpoint balancing circuit does not need to be additionally used, thereby helping reducing costs. It may be understood that, in another embodiment, the bus midpoint balancing circuit and the control method in this embodiment may both be used to ensure that the voltage on the DC bus can be balanced in time when the imbalance occurs.

The first bridge arm 112 is connected between the positive DC bus and the negative DC bus (BUS+ and BUS-). The first bridge arm 112 includes a first switch transistor S1 and a second switch transistor S2 connected in series. A midpoint a between the first switch transistor S1 and the second switch transistor S2 is connected to a first end of an inductor L1. A second end of the inductor L1 serves as a live output terminal L of the T-type three-level inverter circuit 110. The live output terminal L is configured to be connected to a live of a load. Specifically, a first end of the first switch transistor S1 is connected to the positive DC bus BUS+. A second end of the first switch transistor S1 is connected to a first end of the second switch transistor S2 and a first end of the inductor L1 (namely, the midpoint a between the first switch transistor S1 and the second switch transistor S2). A second end of the second switch transistor S2 is connected to the negative DC bus BUS-.

The second bridge arm 113 is connected between a midpoint a of the first bridge arm 112 and a midpoint O of the two bus capacitors. The midpoint O is further connected to a neutral wire output terminal N of the T-type three-level inverter circuit 110. The neutral wire output terminal N is configured to be connected to a neutral wire of the load. The second bridge arm 113 includes a third switch transistor S3 and a fourth switch transistor S4 connected in series, and the third switch transistor S3 and the fourth switch transistor S4 are arranged opposite to each other. Specifically, a first end of the third switch transistor S3 is connected to the midpoint a of the first bridge arm 112 and the first end of the inductor L1. A second end of the third switch transistor S3 is connected to a second end of the fourth switch transistor S4. A first end of the fourth switch transistor S4 is connected to the midpoint O of the two bus capacitors. For example, when the third switch transistor S3 and the fourth switch transistor S4 are both triode transistors, a transmitter of the third switch transistor S3 serves as the second end, a collector serves as the first end. The transmitter of the third switch transistor S3 is connected to a transmitter of the fourth switch transistor S4. A collector of the fourth switch transistor S4 is connected to the negative DC bus BUS-, so that parasitic diodes of the switch transistors or diodes connected in parallel with the switch transistors are connected top to top. Therefore, when the third switch transistor S3 and the fourth switch transistor S4 are both turned off, a branch of the second bridge arm 113 is open.

A control terminal of each switch transistor in the T-type three-level inverter circuit 110 may be connected to the controller 120, and configured to receive a drive signal sent by the controller 120, so that each switch transistor is turned on or turned off based on the received drive signal. The controller 120 may include a central processing unit (CPU), another general-purpose processor, a digital signal processor (DSP), an application specific integrated circuit (ASIC), a field-programmable gate array (FPGA), or another programmable logic device, discrete gate, or transistor logic device, or the like.

It may be understood that, the type of each switch transistor in the T-type three-level inverter circuit 110 is not limited in this embodiment of the present application. For example, each switch transistor may be set to be a triode, a silicon controlled rectifier (SCR), a metal oxide semiconductor field effect transistor (MOSFET), an insulated gate bipolar transistor (IGBT) or a GaN high electron mobility transistor (GaN HEMT), or may be formed through the connection of at least one of a triode, an SCR, an MOSFET, an IGBT, and a GaN HEMT in parallel with a diode. For ease of description, in this embodiment of the present application, a description is provided by using an example in which each switch transistor is formed by a triode and a body diode connected in parallel to the triode. A base of the triode is the control terminal, a collector is the first end, and an emitter is the second end.

An operating principle of the T-type three-level inverter circuit 110 shown in FIG. 1 is as follows.

When an AC outputted by the T-type three-level inverter circuit 110 is in the positive half-cycle, the first switch transistor S1 and the fourth switch transistor S4 are complementarily turned on, the second switch transistor S2 is in an off state, and the third switch transistor S3 is constantly turned on.

Specifically, when the first switch transistor S1 is turned on, the second switch transistor S2 is turned off, the fourth switch transistor S4 is turned off, and the third switch transistor S3 is turned on, a current flows from the positive DC bus BUS+ through the first switch transistor S1, the inductor L1, and the load (Rt shown in FIG. 2 is an equivalent load resistance) to the midpoint O. In this case, the bus capacitor C1 is discharged to charge the inductor L1.

When the first switch transistor S1 is turned off, the second switch transistor S2 is turned off, the third switch transistor S3 is turned on, and the fourth switch transistor S4 is turned on, due to a freewheeling action of the inductor L1, a current on the inductor L1 passes through a circuit formed by the load, the fourth switch transistor S4, and the third switch transistor S3, so that the current on the inductor L1 is gradually decreased.

When the AC outputted by the T-type three-level inverter circuit 110 is in a negative half-cycle (that is, an output terminal L is at a negative voltage), the first switch transistor S1 is in a constant off state, the second switch transistor S2 and the third switch transistor S3 are complementarily turned on, and the fourth switch transistor S4 is constantly turned on.

Specifically, when the second switch transistor S2 is turned on, the third switch transistor S3 is turned off, the first switch transistor S1 is turned off, and the fourth switch transistor S4 is turned on, a negative current on the negative DC bus BUS- flows to the bus capacitor C2 through the second switch transistor S2, the inductor L1, and the load to the midpoint O. In this case, the bus capacitor C2 is discharged to charge the inductor L1.

When the second switch transistor S2 is turned off, the third switch transistor S3 is turned on, the first switch transistor S1 is turned off, and the fourth switch transistor S4 is turned on, due to the freewheeling action of the inductor L1, the current in the inductor L1 passes through the circuit formed by the third switch transistor S3, the fourth switch transistor S4, and the load, so that the current in the inductor L1 is gradually decreased.

When a load connected to the output terminal of the T-type three-level inverter circuit 110 is a nonlinear load (for example, an RCD load), the nonlinear load distorts an output current of the T-type three-level inverter circuit 110 (an AC outputted by the T-type three-level inverter circuit 110 is a sine voltage, and the nonlinear load causes the output current to be a non-sine current). To adapt to the RCD load, the T-type three-level inverter circuit 110 performs overcurrent protection through cycle-by-cycle current limiting protection. When it is detected that the output current of the T-type three-level inverter circuit 110 is greater than an overcurrent threshold, overcurrent protection is triggered. Wave blocking is performed on all switch transistors in the T-type three-level inverter circuit 110, so that all the switch transistors are in an off state.

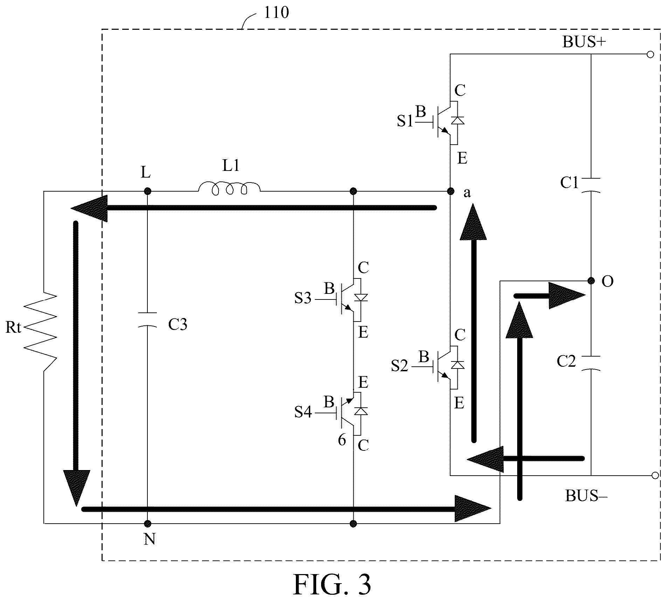

In this case, due to the freewheeling action of the inductor L1, the current on the inductor L1 passes through the circuit (as shown by an arrow in FIG. 3) formed by the load, the bus capacitor C2, and the parasite diode of the second switch transistor S2 to charge the bus capacitor C2. The current on the inductor L1 is gradually decreased to an overcurrent recovery threshold. In this case, the sending of the drive signal to all switch transistors in the T-type inverter single circuit is resumed, so that the T-type three-level inverter circuit 110 normally operates to output the AC.

In a period in which normal operation of the T-type three-level inverter circuit 110 is resumed, when the AC outputted by the T-type three-level inverter circuit 110 is in a positive half-cycle of the AC, the bus capacitor C1 discharges to charge the inductor L1, and the current on the inductor L1 is increased until overcurrent protection is triggered again. After the overcurrent protection is triggered again, wave blocking is performed on the T-type three-level inverter circuit 110. In other words, each switch transistor of the T-type three-level inverter circuit 110 is controlled to be in the off state. In this case, the bus capacitor C2 continues to be charged through the circuit shown in FIG. 3. Therefore, after the T-type three-level inverter circuit 110 triggers cycle-by-cycle current limiting, because a fault protection measure is not immediately taken (for example, the T-type three-level inverter circuit 110 is shut down), the foregoing process is repeatedly performed, and the bus capacitor C1 is discharged. After overcurrent protection is triggered, the bus capacitor C2 is charged.

It can be seen that, in a process of cycle-by-cycle current limiting protection, the bus capacitor C2 is always charged, and the bus capacitor C1 is always discharged. Consequently, a difference between the voltage of the bus capacitor C1 and the voltage of the bus capacitor C2 is increasingly large. Further, a voltage of the midpoint of the DC bus is imbalanced, easily causing problems such as damage to the switch transistor in the circuit and premature shutdown protection for the circuit.

Therefore, the present application provides a control method for a T-type three-level inverter circuit 110, to resolve the problem that the voltage of the midpoint of the DC bus is imbalanced when the T-type three-level inverter circuit 110 performs the cycle-by-cycle current limiting protection. In at least one embodiment, the control method provided in the present application may be performed by the foregoing controller 120. It may be understood that one or more controllers 120 may be provided and jointly implement the control method in this embodiment.

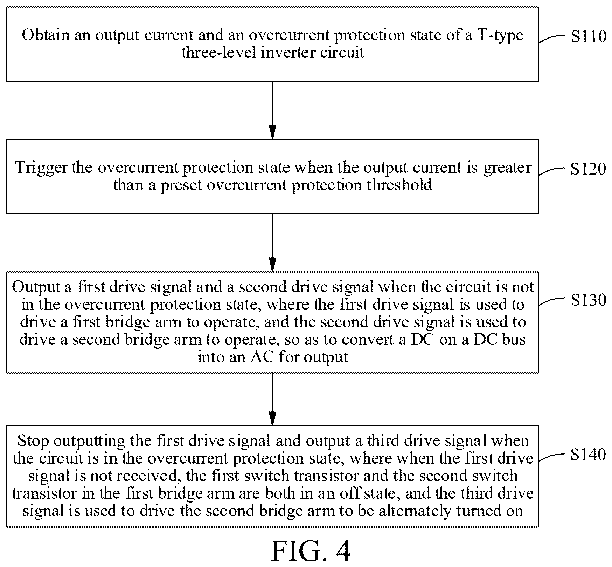

Referring to FIG. 4, FIG. 4 is a flowchart of a control method for a T-type three-level inverter circuit according to an embodiment of the present application. The control method includes the following steps S110-S140.

S110: Obtain an output current and an overcurrent protection state of the T-type three-level inverter circuit.

The output current may be obtained through current detection performed by a current detection circuit on an output terminal of the T-type three-level inverter circuit 110. The current detection circuit may be integrated into a controller 120, or may be connected to the controller 120 and independently arranged.

In addition, the overcurrent protection state may be represented by setting an overcurrent state value. For example, the overcurrent state value is 0 by default. When the overcurrent protection state is triggered, the overcurrent state value is set to 1. However, when the overcurrent protection state is not triggered or the overcurrent protection state is released, the overcurrent state value is set to 0, or vice versa. Therefore, the overcurrent protection state of the T-type three-level inverter circuit 110 may be obtained by obtaining the overcurrent state value.

S120: Trigger the overcurrent protection state when the output current is greater than a preset overcurrent protection threshold.

For example, when the output current is greater than the preset overcurrent protection threshold, the overcurrent state value is set to 1, to represent that the overcurrent protection state is triggered.

S130: Output a first drive signal and a second drive signal when the circuit is not in the overcurrent protection state, where the first drive signal is used to drive a first bridge arm to operate, and the second drive signal is used to drive a second bridge arm to operate, so as to convert a DC on the positive DC bus and the negative DC bus into an AC for output.

The first drive signal and the second drive signal may be pulse width modulation (PWM) signals. The first switch transistor S1 and the second switch transistor S2 in the first bridge arm 112 are controlled to be turned on and turned off by the first drive signal. A switch transistor in the second bridge arm 113 is controlled to be turned on and turned off by the second drive signal. It may be understood that the first switch transistor S1 and the second switch transistor S2 in the first bridge arm 112 are not simultaneously turned on, and the two switch transistors in the second bridge arm 113 are also not simultaneously turned on.

S140: Stop outputting the first drive signal and output a third drive signal when the circuit is in the overcurrent protection state, where when the first drive signal is not received, the first switch transistor and the second switch transistor in the first bridge arm are both in an off state, and the third drive signal is used to drive the second bridge arm to be alternately turned on.

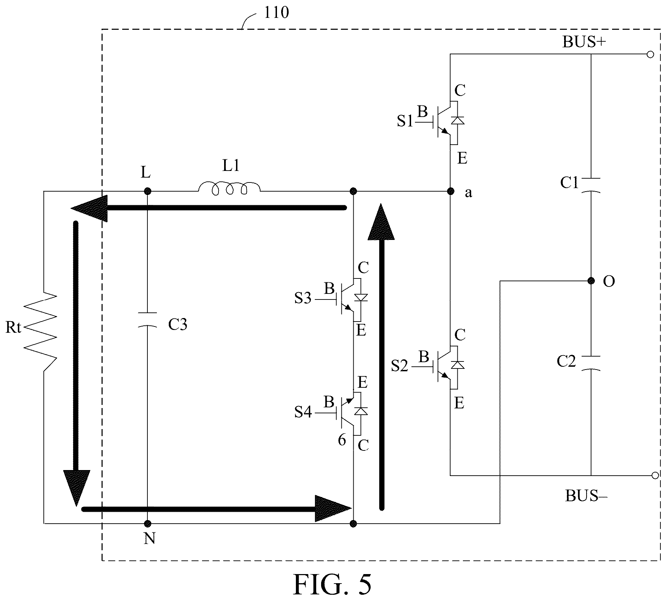

Because the third drive signal drives a second bridge arm 113 to be alternately turned on, a current on an inductor L1 is leaked through a path (shown by an arrow in FIG. 5) formed by a second bridge arm 113 when the second bridge arm 113 is turned on, so that the current on the inductor L1 is gradually decreased, thereby reducing a time for forming the path in FIG. 3. In other words, a time for charging a bus capacitor C2 through the inductor L1 can be reduced, preventing a voltage of the bus capacitor C2 from rising, thereby preventing an imbalance of a voltage of a midpoint of the bus capacitors C1 and C2.

In the control method provided in the present application, when the output current of the T-type three-level inverter circuit 110 is greater than a preset threshold, an overcurrent protection state is triggered. When the circuit is in the overcurrent protection state, the controller 120 stops outputting the first drive signal and outputs the third drive signal, so that the first switch transistor S1 and the second switch transistor S2 in the first bridge arm 112 are in an off state due to not receiving the first drive signal, and the second bridge arm 113 is alternately turned on due to receiving the third drive signal. Therefore, during overcurrent protection, the second bridge arm 113 and the inductor L1 may form a release circuit for an inductor current, so that the current on the inductor L1 is gradually decreased. Therefore, the current on the inductor L1 is prevented from charging the bus capacitor C2 through the parasitic diode of the second switch transistor S2 to increase a voltage of the bus capacitor C2. Further, a problem that the voltage of the midpoint of the DC bus is imbalanced can be prevented when the T-type three-level inverter circuit 110 performs cycle-by-cycle current limiting protection.

It should be noted that, in the present application, no necessary sequence exists among steps S110, S120, S130, and S140. For example, after the overcurrent protection state is triggered, the circuit is in the overcurrent protection state, and step S140 is performed. However, when the overcurrent protection state is not triggered, the circuit is not in the overcurrent protection state, and step S130 is performed.

It may be understood that, when the output current is less than a preset overcurrent recovery threshold, the overcurrent protection does not need to be performed. Therefore, the control method may further include: releasing the overcurrent protection state when the output current is less than the preset overcurrent recovery threshold and the circuit is in the overcurrent protection state. The preset overcurrent recovery threshold is less than the preset overcurrent protection threshold. When the overcurrent protection state is released, the first drive signal and the second drive signal may be outputted again, to drive the first bridge arm 112 and the second bridge arm 113 to resume normal operation.

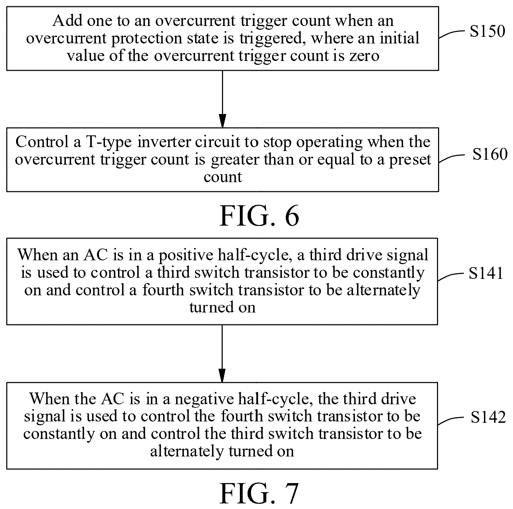

Referring to FIG. 6, FIG. 6 is a partial flowchart of a control method according to an embodiment of the present application. As shown in FIG. 6, in some embodiments, a control method for a T-type three-level inverter circuit 110 may further include the following steps.

S150: Add one to an overcurrent trigger count when an overcurrent protection state is triggered, where an initial value of the overcurrent trigger count is zero.

The overcurrent protection state is triggered when an output current is greater than a preset overcurrent protection threshold. In this case, a first drive signal is stopped from being outputted to a first bridge arm 112, and a third drive signal is outputted to a second bridge arm 113, so that the second bridge arm 113 is alternately turned on.

S160: Control the T-type three-level inverter circuit to stop operating when the overcurrent trigger count is greater than or equal to a preset count.

When the overcurrent trigger count is greater than or equal to the preset count, it may be determined that the output current of the T-type three-level inverter circuit 110 is subjected to overcurrent. To prevent a circuit from being damaged due to the overcurrent of the output current, the T-type three-level inverter circuit 110 is controlled to stop operating.

Compared with when wave blocking is performed on all switch transistors, because the inductor L1 charges a negative bus capacitor C2, a speed of reducing the voltage of an inductor L1 is relatively fast, so that the output current is reduced relatively fast. When the output current is relatively much less than a preset overcurrent recovery threshold, the first drive signal and the second drive signal are outputted again, so that the circuit resumes to normal operation. Therefore, when the circuit resumes the normal operation, it takes a relatively long time for the output current to reach the overcurrent protection threshold again. In this process, the inductor L1 also charges the bus capacitor C2 for a longer time, so that a larger voltage difference exists between the two bus capacitors C1 and C2.

However, in this example, when the overcurrent protection state is triggered, the third drive signal is outputted, so that the second bridge arm 113 is alternately turned on, and a switching loss only occurs for a third switch transistor S3 and a fourth switch transistor S4 in a release circuit formed by the second bridge arm 113 without another device that can consume electric energy. Therefore, electric energy of the inductor L1 is slowly reduced. When the output current just decreases to the preset overcurrent recovery threshold, the first drive signal and the second drive signal can be quickly outputted again, so that a normal operation process of the circuit is resumed. However, during resumption of the normal operation, because the output current remains relatively large, and a shorter time is required for the output current to rise to the overcurrent protection threshold, a shorter time is also required for resumption of the normal operation. Therefore, a shorter time is also required to charge the bus capacitor C2, so as to further prevent an increase in a voltage difference between the two bus capacitors C1 and C2, thereby further preventing a problem that a voltage of a midpoint of the DC bus is imbalanced.

Referring to FIG. 7, FIG. 7 is a detailed flowchart in step S140 in which a third drive signal is used to drive a second bridge arm to be alternately turned on according to an embodiment of the present application. The step includes the following.

S141: When the AC is in a positive half-cycle, the third drive signal is used to control the third switch transistor to be constantly on and control the fourth switch transistor to be alternately turned on.

In this case, when a first switch transistor S1 and a second switch transistor S2 are both turned off, a fourth switch transistor S4 is turned on and a third switch transistor S3 is turned on, the third switch transistor S3 and the fourth switch transistor S4 form a release circuit of the inductor L1. The release circuit is shown by an arrow in FIG. 5, and enables freewheeling discharging of the inductor L1. However, when the fourth switch transistor S4 is turned off, the release circuit of the inductor L1 cannot be formed.

S142: When the AC is in a negative half-cycle, the third drive signal is used to control the fourth switch transistor to be constantly on and control the third switch transistor to be alternately turned on.

In this case, when the first switch transistor S1 and the second switch transistor S2 are both turned off, the fourth switch transistor S4 is turned on, and the third switch transistor S3 is turned on, the third switch transistor S3 and the fourth switch transistor S4 form the release circuit of the inductor L1 to enable freewheeling discharging of the inductor L1. In this case, a current direction is opposite to the current direction in FIG. 5. When the third switch transistor is turned off, the release circuit of the inductor L1 cannot be formed.

It may be understood that the AC being in the positive half-cycle or the negative half-cycle means that the AC is in the positive half-cycle or the negative half-cycle when a T-type three-level inverter circuit 110 normally operates until this moment, rather than that the AC is actually in the positive half-cycle or the negative half-cycle at this moment. In this case, the positive and the negative of the AC is the same as the positive and the negative at the moment when an overcurrent protection state is triggered.

In some embodiments, the third drive signal may be the same as the second drive signal. In other words, when the overcurrent protection state is triggered, output of the first drive signal to the first bridge arm 112 is stopped, but output of the second drive signal to the second bridge arm 113 is continued. Certainly, the third drive signal may also be different from the second drive signal, but may have a same timing as the second drive signal. In other words, when the overcurrent protection state is triggered, output of the second drive signal to the second bridge arm 112 is stopped, and the third drive signal is outputted to the second bridge arm 112. Alternatively, the timing of the third drive signal is different from that of the second drive signal. This is not limited in the present application, provided that the third drive signal can cause the second bridge arm 113 to be alternately turned on. In other words, the second bridge arm 113 is caused to be alternately switched between an on state and an off state.

Further, step S130 includes the following.

When the AC is in the positive half-cycle, the first drive signal is used to control turn-on and turn-off of the first switch transistor and control the second switch transistor to be constantly off, the second drive signal is used to control the third switch transistor to be constantly on and control turn-on and turn-off of the fourth switch transistor, and the first switch transistor and the fourth switch transistor are alternately turned on.

When the AC is in the negative half-cycle, the first drive signal is used to control turn-on and turn-off of the second switch transistor and control the first switch transistor to be constantly off, the second drive signal is used to control the fourth switch transistor to be constantly on and control turn-on and turn-off of the third switch transistor, and the second switch transistor and the third switch transistor are alternately turned on.

A specific operating process is described in the foregoing embodiment. Details are not described herein again.

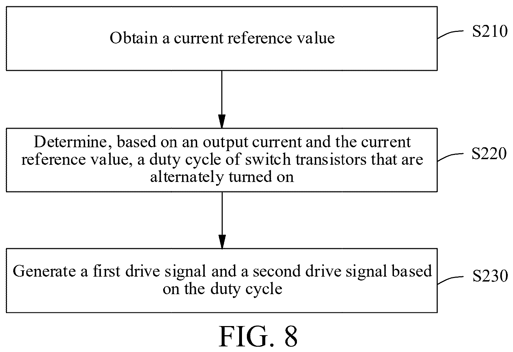

Referring to FIG. 8, in some embodiments, the control method may further include the following steps.

S210: Obtain a current reference value.

The current reference value may be preset based on an actual requirement. Alternatively, the current reference value may be obtained based on an output voltage and a voltage reference value. Specifically, a voltage deviation value between the output voltage and the voltage reference value is calculated, and proportional adjustment or proportional integral adjustment is performed on the voltage deviation value to obtain the current reference value. Certainly, a specific manner for obtaining the current reference value is not limited in the present application.

S220: Determine, based on the output current and the current reference value, a duty cycle of the switch transistors that are alternately turned on.

Specifically, the current deviation value may be calculated based on the output current and the current reference value, and the proportional adjustment or the proportional integral adjustment is performed on the current deviation value to obtain the duty cycle.

S230. Generate a first drive signal and a second drive signal based on the duty cycle.

In this example, the output current serves as a feedback value. The duty cycle is determined based on the output current and a current reference value. Then, the first drive signal and the second drive signal are outputted based on the duty cycle, thereby implementing an adjustment on an output current of a T-type three-level inverter circuit 110 and causing the output current to meet a requirement and be more stable.

In some embodiments, the output current may be adjusted through the current circuit. The output current and the current reference value are inputted to the current circuit, so that the current circuit determines the duty cycle. Alternatively, the current reference value is first obtained through a voltage circuit, and then the output current is adjusted through the current circuit.

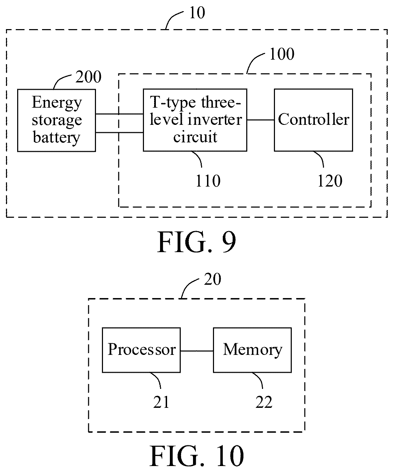

The present application further provides an energy storage device. As shown in FIG. 9, FIG. 9 is a schematic diagram of modules of an energy storage device 10 according to an embodiment of the present application. Specifically, the energy storage device 10 includes an energy storage battery 200 and the foregoing power conversion apparatus 100. The energy storage battery 200 is connected to a positive DC bus and a negative DC bus (BUS+ and BUS-) to provide a DC to the positive DC bus and the negative DC bus (BUS+ and BUS-). A T-type three-level inverter circuit 110 is configured to convert the DC on the positive DC bus and the negative DC bus (BUS+ and BUS-) into an AC for output.

In some embodiments, a DC conversion module (not shown in the figure) may be further connected between the energy storage battery 200 and the positive DC bus and the negative DC bus (BUS+ and BUS-). The DC conversion module is configured to perform voltage conversion on the DC of the energy storage battery 200 and then provide the DC to the positive DC bus and the negative DC bus (BUS+ and BUS-).

Referring to FIG. 10, the present application further provides an electronic device 20 including a processor 21 and a memory 22. The memory 22 stores an executable instruction of the processor 21. The processor 21 is configured to perform the foregoing control method by executing the executable instruction.

The present application further provides a computer-readable storage medium storing a computer program thereon. The computer program, when executed by a processor, implements the foregoing control method.

The processor may be a central processing unit (CPU), and may further be another general-purpose processor, a DSP, an application specific integrated circuit (ASIC), a field-programmable gate array (Field-Programm Second Virtual Image le Gate Array, FPGA) or another programmable logic device, a discrete gate or a transistor logic device, a discrete hardware component, or the like. The general-purpose processor may be a microprocessor, or the processor may also be any conventional processor, or the like.

The memory may be configured to store a computer program and/or module. The processor implements various functions of the power conversion apparatus 100 by running or obtaining the computer program and/or module stored in the memory and invoking data stored in the memory. The memory may mainly include a program storage area and a data storage area. The program storage area may store an operating system, an application program (for example, a switch function and a key processing function) required for at least one function, and the like. The data storage area may store data created based on use of the power conversion apparatus 100, and the like. In addition, the memory may include a non-volatile memory, for example, a hard disk, a memory, a plug-in hard disk, a smart media card (SMC) card, a secure digital (SD) card, a flash card, at least one magnetic disk storage device, a flash memory device, or another non-volatile solid-state storage device.

The memory may be an external memory and/or an internal memory of the power conversion apparatus 100 and/or the energy storage device 10. Further, the memory may be a memory having a physical form, for example, a memory bank or a trans-flash (TF) card.

When the program code and various data in the memory are implemented in the form of a software functional unit and sold or used as an independent product, the integrated unit may be stored in a computer-readable storage medium. Based on such understanding, all or some of the processes in the method of the foregoing embodiments, for example, the control method for the T-type three-level inverter circuit 110, may be implemented by a computer program instructing relevant hardware in the present application. The computer program may be stored in a computer-readable storage medium. When the computer program is executed by a processor, steps of the foregoing method embodiments may be implemented. The computer program includes computer program code. The computer program code may be in the form of source code, object code, and an executable file, some intermediate forms, or the like. The computer-readable medium may include any entity or apparatus capable of carrying the computer program code, a recording medium, a USB flash disk, a mobile hard disk, a magnetic disk, an optical disk, a computer memory, a read-only memory (ROM), and the like.

The embodiments of the present application are described above in detail with reference to the drawings. However, the present application is not limited to the foregoing embodiments. Within the scope of knowledge possessed by a person skilled in the art, various modifications may further be made without departing from the spirit of the present application.

## Claims

1. A control method for a T-type three-level inverter circuit, wherein the T-type three-level inverter circuit comprises a bus capacitor unit, a positive direct current (DC) bus, a negative DC bus, a first bridge arm, a second bridge arm, and an inductor, the bus capacitor unit is connected between the positive DC bus and the negative DC bus, the bus capacitor unit comprises two bus capacitors connected in series, the first bridge arm is connected between the positive DC bus and the negative DC bus, the first bridge arm comprises a first switch transistor and a second switch transistor connected in series, a midpoint between the first switch transistor and the second switch transistor is connected to a first end of the inductor, a second end of the inductor serves as an output terminal of the T-type three-level inverter circuit, the second bridge arm is connected between a midpoint of the first bridge arm and a midpoint of the two bus capacitors, and the control method comprises:
obtaining an output current and an overcurrent protection state of the T-type three-level inverter circuit;
triggering the overcurrent protection state when the output current is greater than a preset overcurrent protection threshold;
outputting a first drive signal and a second drive signal when the circuit is not in the overcurrent protection state, wherein the first drive signal is used to drive the first bridge arm to operate, and the second drive signal is used to drive the second bridge arm to operate, so as to convert a DC on the positive DC bus and the negative DC bus into an alternating current (AC) for output; and
stopping outputting the first drive signal and outputting a third drive signal when the circuit is in the overcurrent protection state, wherein when the first drive signal is not received, the first switch transistor and the second switch transistor in the first bridge arm are both in an off state, and the third drive signal is used to drive the second bridge arm to be alternately turned on.

2. The control method according to claim 1, further comprising:
releasing the overcurrent protection state when the output current is less than a preset overcurrent recovery threshold and the circuit is in the overcurrent protection state, wherein the preset overcurrent recovery threshold is less than the preset overcurrent protection threshold.

3. The control method according to claim 2, further comprising:
adding one to an overcurrent trigger count when the overcurrent protection state is triggered, wherein an initial value of the overcurrent trigger count is zero; and
controlling the T-type three-level inverter circuit to stop operating when the overcurrent trigger count is greater than or equal to a preset count.

4. The control method according to any one of claims 1 to 3, wherein the second bridge arm comprises a third switch transistor and a fourth switch transistor connected in series, and the third switch transistor and the fourth switch transistor are arranged opposite to each other; and
that the third drive signal is used to drive the second bridge arm to be alternately turned on comprises:
when the AC is in a positive half-cycle, the third drive signal is used to control the third switch transistor to be constantly on and control the fourth switch transistor to be alternately turned on; and
when the AC is in a negative half-cycle, the third drive signal is used to control the fourth switch transistor to be constantly on and control the third switch transistor to be alternately turned on.

5. The control method according to claim 4, wherein that the first drive signal is used to drive the first bridge arm to operate, and the second drive signal is used to drive the second bridge arm to operate comprises:
when the AC is in the positive half-cycle, the first drive signal is used to control turn-on and turn-off of the first switch transistor and control the second switch transistor to be constantly off, the second drive signal is used to control the third switch transistor to be constantly on and control turn-on and turn-off of the fourth switch transistor, and the first switch transistor and the fourth switch transistor are alternately turned on; and
when the AC is in the negative half-cycle, the first drive signal is used to control turn-on and turn-off of the second switch transistor and control the first switch transistor to be constantly off, the second drive signal is used to control the fourth switch transistor to be constantly on and control turn-on and turn-off of the third switch transistor, and the second switch transistor and the third switch transistor are alternately turned on.

6. The control method according to claim 5, further comprising:
obtaining a current reference value;
determining, based on the output current and the current reference value, a duty cycle of the switch transistors that are alternately turned on; and
generating the first drive signal and the second drive signal based on the duty cycle.

7. A power conversion apparatus, comprising a T-type three-level inverter circuit and a controller, wherein the T-type three-level inverter circuit comprises a bus capacitor unit, a positive DC bus, a negative DC bus, a first bridge arm, a second bridge arm, and an inductor, the bus capacitor unit is connected between the positive DC bus and the negative DC bus, the bus capacitor unit comprises two bus capacitors connected in series, the first bridge arm is connected between the positive DC bus and the negative DC bus, the first bridge arm comprises a first switch transistor and a second switch transistor connected in series, a midpoint between the first switch transistor and the second switch transistor is connected to a first end of the inductor, a second end of the inductor serves as an output terminal of the T-type three-level inverter circuit, the second bridge arm is connected between a midpoint of the first bridge arm and a midpoint of the two bus capacitors, and the controller is configured to perform the control method according to any one of claims 1 to 6.

8. An energy storage device, comprising an energy storage battery and the power conversion apparatus according to claim 7, wherein the energy storage battery is connected to the positive DC bus and the negative DC bus to provide a DC to the positive DC bus and the negative DC bus, and the T-type three-level inverter circuit is configured to convert the DC on the positive DC bus and the negative DC bus into an AC for output.

9. An electronic device, comprising:
a processor; and
a memory, storing an executable instruction of the processor, wherein
the processor is configured to perform the control method according to any one of claims 1 to 6 by executing the executable instruction.

10. A computer-readable storage medium, storing a computer program, the computer program, when executed by a processor, implementing the control method according to any one of claims 1 to 6.
